(19) Europäisches Patentamt
European Patent Office
Office européen des brevets

(11) EP 0 921 169 B1

(12) **EUROPÄISCHE PATENTSCHRIFT**

(45) Veröffentlichungstag und Bekanntmachung des Hinweises auf die Patenterteilung:
**02.05.2001 Patentblatt 2001/18**

(51) Int Cl.[7]: **C09D 183/06**, C09D 135/00, C09D 135/06, C08J 7/04

(21) Anmeldenummer: **98121125.3**

(22) Anmeldetag: **10.11.1998**

(54) **Barriereschichtzusammensetzung für Kunststoffkörper**

Barrier coating composition for plastic articles

Composition de revêtement de barrière pour articles en plastique

(84) Benannte Vertragsstaaten:
**DE ES FR GB IT SE**

(30) Priorität: **08.12.1997 DE 19754456**

(43) Veröffentlichungstag der Anmeldung:
**09.06.1999 Patentblatt 1999/23**

(73) Patentinhaber:
- **PLASTIC OMNIUM GmbH
61184 Karben (DE)**
- **FEW Forschungs- und Entwicklungsgesellschaft Wolfen mbH
06766 Wolfen (DE)**

(72) Erfinder:
- **Probst, Werner
63628 Bad Soden-Salmünster (DE)**
- **Knobloch, Peter
93105 Tegernheim (DE)**
- **Roth, Christoph, Dr.
06118 Halle (DE)**
- **Müller, Hans-Jürgen
06792 Sandersdorf (DE)**

(74) Vertreter: **Reinhard - Skuhra - Weise & Partner
Friedrichstrasse 31
80801 München (DE)**

(56) Entgegenhaltungen:
**EP-A- 0 819 743**
**DE-A- 1 669 635**
**DE-A- 2 205 660**
**DE-A- 3 212 771**
**GB-A- 2 137 648**

EP 0 921 169 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine Barriereschichtzusammensetzung für Kunststoffkörper, insbesondere für Kunststoffhohlkörper, die bevorzugt aus Polyolefinen bestehen. Die Zusammensetzung weist eine verbesserte Sperrwirkung gegen den Austritt flüchtiger organischer Kohlenwasserstoffe, beispielsweise Benzin, Aromaten oder Mineralöl, auf.

Kunststoffhohlkörper finden heute eine sehr breite Anwendung als Verpackungsmaterial für feste und flüssige organische Stoffe. Sie zeichnen sich durch eine gute chemische Beständigkeit, gute mechanische Eigenschaften sowie geringes Eigengewicht aus. Ein weiterer Vorteil ist die leichte Realisierbarkeit einer sehr vielfältigen Formgestaltung, wobei insbesondere Polyolefine hoher Dichte (HDPE) aus ökonomischen Gründen dominieren. Für den Einsatz solcher Behälter z. B. als Kraftstofftanks für Pkws ist es nachteilig, daß Polyethylen den mechanischen Eigenschaftsanforderungen zwar gerecht wird, aber eine gewisse Durchlässigkeit für Aromaten z. B. in Kraftstoffen zeigt.

Um diesen Nachteil zu beseitigen, gibt es zahlreiche Vorschläge wie

(a) Schaffung von Laminatstrukturen durch Coextrusion (z. B. mit Polyamiden, EVOH etc.)

(b) Oberflächenmodifizierung, beispielsweise durch Fluorierung, Sulfonierung etc.

(c) Aufbringen von Sperrschichten durch Lackierung

Die Herstellung von großvolumigen, blasgeformten Hohlkörpern mit Laminatstrukturen ist sehr kostenintensiv und produktionstechnisch problematisch, und die Behälter erfüllen oft nicht alle Prüfanforderungen für Kraftstofftanks. Es dominieren in der Praxis deshalb Verfahren, die eine Permeationsverringerung durch Oberflächenmodifizierung erzielen. Beispiele dafür sind die Sulfonierung (DE 1 953 321, US 3 740 258), die Fluorierung (Gas Aktuell 1993, 45, S.9, Plast. Eng. 1978, 34, S. 4, JP 61 230 919) sowie die Durchführung einer Plasmapolymerisation (DE 4 318 086, EP 302 457, EP 739 655). Die Verfahren mit hoch toxischen und chemisch aggressiven Gasen erfordern aber einen hohen material- und sicherheitstechnischen Aufwand.

Es ist weiterhin bekannt, mittels Zersetzung von siliziumorganischen Verbindungen im Plasma $SiO_x$-Schichten mit Barrierewirkung abzuscheiden (Vak. Prax. 1991, 3, S. 27). Desweiteren wird in den Patentschriften EP 558 886 und 551819 vorgeschlagen, Hohlkörperinnenflächen nach einer Plasmabehandlung mit feuchtigkeitshärtenden Diisocyanaten zu behandeln. Dieses Verfahren hat den Nachteil, daß es den Einsatz hochtoxischer Verbindungen erfordert und auch fertigungstechnisch schwierig durchführbar ist.

Die Aufbringung von Lackschichten zur Unterdrückung der Permeation ist ebenfalls bekannt. So wird vorgeschlagen, als Lackbindemittel Polyepoxid in Kombination mit plastifizierenden Polyurethanen zu verwenden (DE 3 447 022) oder in Kombination mit einer Sulfonierung Harnstoff- oder Melamin-Formaldehyd-Harze als Bindemittel (GB 2 069 870). Diese Verfahren verhindern aber die Permeation nur unzureichend. DE 3 212 771 beschreibt eine Barriereschichtzusammensetzung aus einem epoxidhaltigen Siloxansol, einem monomeren Anhydrid und einem tärtierem Amin. Die im Prioritätsinterval veröffentlichte EP 0 819 743 beschreibt eine Zusammensetzung aus einem epoxidhaltigen Siloxansol und einem Maleinsäurehalbester oder Maleinsäurehalbamid Mischpolymerisat. Aufgabe der vorliegenden Erfindung ist es deshalb, eine neue Barriereschicht für Kunststoffkörper zu entwickeln, die keiner Behandlung in Form einer Sulfonierung oder Fluorierung bedarf und bei der zur Aufbringung nach bekannten Beschichtungstechnologien keine aggressiven oder hochtoxischen Komponenten verwendet werden.

Diese Aufgabe wird erfindungsgemäß dadurch gelöst, daß eine Barriereschichtzusammensetzung bereitgestellt wird, die im wesentlichen die nachfolgenden Bestandteile aufweist:

(a) 35 bis 75 Gew.-% eines epoxidhaltigen oder halogen-und epoxidhaltigen Metalloxidsols

(b) 20 bis 60 Gew.-% eines fluor- oder sulfohaltigen Maleinsäurehalbester- oder Maleinsäurehalbamid-Mischpolymerisats der allgemeinen Strukturformel

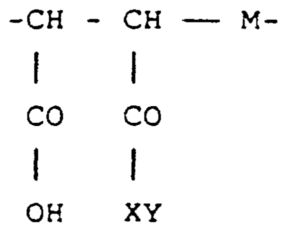

worin M = Vinylmonomer, X = Sauerstoff, Stickstoff

$$Y = -(CH_2)_n\text{-}SO_3H$$

$$-(CH_2)_n\text{-}F$$

$$-(CF_2)_n\text{-}H$$

n = 2 bis 12 bedeuten

(c) 0,5 bis 5 Gew.-% eines Katalysators auf der Basis eines oder mehrerer tertiärer Amine, wobei die Gewichtsprozente auf die Summe von (a), (b) und (c) bezogen sind.

Weitere bevorzugte Ausführungsformen der erfindungsgemäßen Barriereschichtzusammensetzung weisen im wesentlichen die nachfolgenden Bestandteile auf:

(a) 45 bis 65 Gew.-% eines epoxidhaltigen oder halogen-und epoxidhaltigen Metalloxidols
(b) 30 bis 50 Gew.-% eines fluor- oder sulfohaltigen Maleinsäurehalbester- oder Maleinsäurehalbamid-Mischpolymerisats der allgemeinen Strukturformel

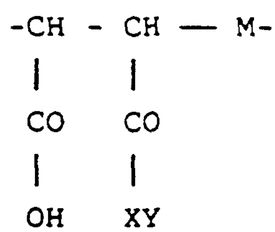

worin M = Vinylmonomer, X = Sauerstoff, Stickstoff

$$Y = -(CH_2)_n\text{-}SO_3H$$

$$-(CH_2)_n\text{-}F$$

$$-(CF_2)_n\text{-}H$$

n = 2 bis 12 bedeuten
(c) 1 bis 5 Gew.-% eines Katalysators auf der Basis eines oder mehrerer tertiärer Amine;

oder

(a) 45 bis 55 Gew.-% eines epoxidhaltigen oder halogen-und epoxidhaltigen Metalloxidols

(b) 40 bis 50 Gew.-% eines fluor- oder sulfohaltigen Maleinsäurehalbester- oder Maleinsäurehalbamid-Mischpolymerisats der allgemeinen Strukturformel

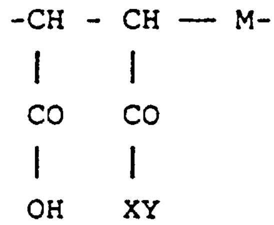

worin M = Vinylmonomer, X = Sauerstoff, Stickstoff

$$Y = -(CH_2)_n-SO_3H$$

$$-(CH_2)_n-F$$

$$-(CF_2)_n-H$$

n = 2 bis 12 bedeuten

(c) 3 bis 5 Gew.-% eines Katalysators auf der Basis eines oder mehrerer tertiärer Amine.

Die erfindungsgemäß bereitgestellte Barriereschichtzusammensetzung eignet sich insbesondere für Hohlkörper aus Polyolefinen, beispielsweise aus Polyethylen. Die Barriereschichtzusammensetzung kann beispielsweise durch Lackierung aufgebracht werden und unterdrückt beispielsweise besonders wirkungsvoll den Durchtritt von Aromaten aus Kraftstoffen. Sie ist insbesondere für Kunststoffhohlkörper, bevorzugt aus Polyolefinen wie Polyethylen oder Polypropylen, geeignet. Weitere Beispiele für beschichtbare Kunststoffmaterialien sind PET und PVC.

Die erfindungsgemäß bereitgestellte Barriereschichtzusammensetzung, die auch als Sperrschichtzusammensetzung bezeichnet werden kann, ist bevorzugt bei Polyolefinkörpern, insbesondere bei Polyolefinhohlkörpern, anwendbar, bei denen sie zumindest einseitig aufgebracht wird. Erfindungsgemäß sind aber auch weitere Anwendungsgebiete mit umfaßt. Hierzu gehört beispielsweise die Auftragung einer Sperrschicht auf lösungsmittelempfindliche Lackschichten. Die in der Beschichtungslösung zur Aufbringung der erfindungsgemäßen Barriereschichtzusammensetzung enthaltenen Lösungsmittel werden dabei selbsverständlich so ausgewählt, daß die Lackschichten nicht angegriffen werden.

Die erfindungsgemäße Barriereschichtzusammensetzung weist als weitere Vorteile auf, daß sie eine gute Haftung z.B. auf Polyolefinen besitzt sowie die Permeation wirkungsvoll erniedrigt. Die Sperrschicht wird zumindest einseitig auf Hohlkörpern aus Polyolefinen aufgebracht. Bevorzugt ist als Polyolefin ein Polyethylen. Die Sperrschicht verringert die Permeation organischer Stoffe, beispielsweise von organischen Lösungsmitteln, flüchtigen Kohlenwasserstoffen und Aromaten, beispielsweise von Benzin und Mineralölen, Pflanzenschutzmitteln, Kosmetika also von Materialien, insbesondere von Flüssigkeiten, bei denen eine Diffusion verhindert werden soll. In einer bevorzugten Ausführungsform der Erfindung wird die Barriereschichtzusammensetzung auf einen Kraftstofftank für Kraftfahrzeuge aufgebracht.

In einer Ausführungsform der Erfindung enthält die Sperrschichtzusammensetzung zusätzlich 0,1 - 25 Gew.-%, bezogen auf die Gesamtzusammensetzung, an Zusatzstoffen, die die Funktion der Zusammensetzung als Sperrschicht nicht oder nur geringfügig beeinträchtigen. In bevorzugten Ausgestaltungen der Erfindung liegen die Zusatzstoffe in einer Menge von 0,1 - 1 Gew.%, 3-20 Gew.-% oder 5- 15 Gew.-% vor, je bezogen auf die Gesamtzusammensetzung. Bevorzugt handelt es sich um Farbstoffe oder Farbstoffpigmente. Erfindungsgemäß sind auch Füllstoffe einsetzbar, insoweit sie die Sperrschichtwirkung der erfindungsgemäßen Zusammensetzung nicht oder nur unwesentlich beeinträchtigen. Die erfindungsgemäßen Metalloxidsole können in bekannter Weise durch Sol/Gel-Technologie hergestellt werden, indem Metallalkoxidverbindungen, vorzugsweise die des Siliziums, in Gegenwart von Lösungsmitteln und Katalysatoren hydrolysiert und kondensiert werden (s. R. Reisfeld, C.K. Jörgensen, "Chemistry, Spectroscopy und Application of Sol/Gel-Glasses, Structure and Bonding 77, Springer Verlag 1996). Ein Beispiel für die Herstellung der erfindungsgemäßen Metalloxidsole ist die saure Hydrolyse von Glycidylsilan in Wasser/Lösungsmittelgemischen. Vorzugsweise werden Gemische aus Aceton und Wasser als Lösungsmittel für die Hydrolyse verwendet.

Beispiele für epoxidhaltige oder halogenhaltige Siliziumverbindungen sind

Glycidyloxypropyltrimethoxysilan
Glycidyloxypropyltriethoxysilan
2-(3,4-Epoxycyclohexyl)ethyl-trimethoxysilan
Chlorpropyltrimethoxysilan
Tridecafluorooctyltriethoxysilan

Zusätzlich können die Metalloxide neben Silizium auch Aluminium, Titan oder Zirkonium in Form eines Oxides enthalten. Beispiele für bevorzugte Metalloxidsole sind Ausgangsmischungen folgender Alkoxidverbindungen:

75 Gew.-% Tetraethoxysilan
25 Gew.-% Glycidyloxypropyltrimethoxysilan
50 Gew.-% Tetraethoxysilan
25 Gew.-% Glycidyloxypropyltrimethoxysilan
25 Gew.-% 2-Ethylhexyltitanat
100 Gew.-% Glycidyloxypropyltrimethoxysilan
25 Gew.-% Chloropropyltrimethoxysilan
95 Gew.-% Glycidyloxypropyltrimethoxysilan
5 Gew.-% Tridecafluorooctyltriethoxysilan

Die Herstellung dieser Metalloxidsole erfolgt vorzugsweise in Aceton, Dioxan, Methylethylketon oder Tetrahydrofuran in Gegenwart von Mineralsäuren als Katalysatoren.

Die erfindungsgemäß verwendeten fluor- oder sulfohaltigen Maleinsäurehalbester- oder Maleinsäurehalbamid-Mischpolymerisate können leicht durch polymeranaloge Umsetzung von Maleinsäureanhydrid-Mischpolymerisaten mit fluorhaltigen oder sulfonhaltigen Alkoholen oder Aminen hergestellt werden.

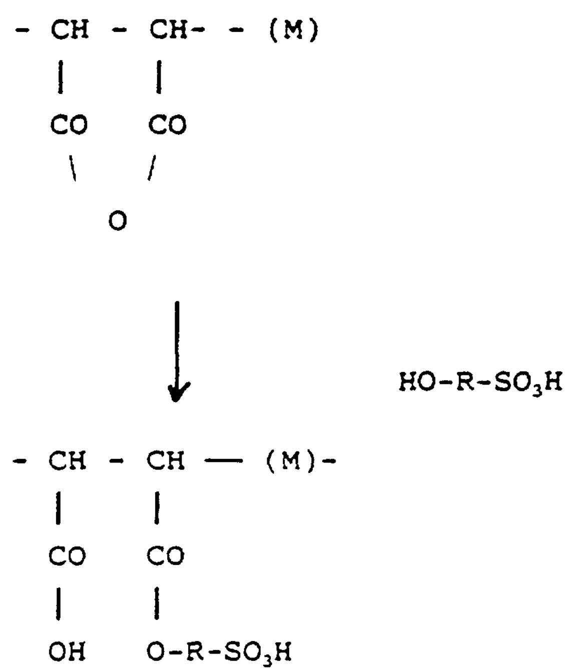


Vorzugsweise wird diese Umsetzung in Aceton oder Methylethylketon bei 50 Grad durchgeführt. Beispiele für solche fluor- oder sulfohaltigen Verbindungen sind Verbindungen der folgenden Strukturformel:

$HO-CH_2-CH_2-CH_2-SO_3H$
$HO-CH_2-CH_2-CH_2-CH_2-SO_3H$
$NH_2-C_6H_4SO_3H$

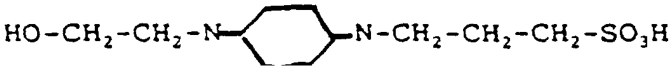

$HO-CF_2-CF_2H$
$HO-CH_2-CH_2-F$

Als Vinylmonomere im Mischpolymerisat können Styrol, α-Methylstyrol, Methylvinylether, Vinylacetat oder Acrylester enhalten sein.
Das Molekulargewicht der Polymere ist nicht kritisch und beträgt vorzugsweise 5 000 bis 350 000 D.
Als Katalysatoren für die Zusammensetzung können tert. Amine verwendet werden. Vorzugsweise finden Triethylamin, Tributylamin, DABCO, Dimethylbenzylamin oder 1-Methylimidazol Anwendung.
Als Lösungsmittel für die Beschichtung werden vorzugsweise Ketone wie Aceton oder Methylethylketon verwendet. Zusätzlich können zur Verbesserung der Oberflächenqualität der festen Schichten auch hochsiedende Lacklösungsmittel Verwendung finden, wie es besonders bei der Spritzlackierung vorteilhaft ist. Beispiele für solche Lösungsmittel sind:

Propylenglykolmethylether
Ethylglykol
Toluol
Xylol
Butylacetat

Die Barriereschicht kann außen, innen oder auf beiden Seiten eines Kunststoffhohlkörpers aufgebracht werden.
Die Beschichtung kann in bekannter Weise durch Spritz- oder Tauchlackierung oder durch Aufbringen auf spitzgegossene geschweißte Kunststoff-Hohlkörper erfolgen, wobei vorzugsweise eine Schichtdicke von 4 bis 20 µm realisiert wird.
Vor der Beschichtung ist es vorteilhaft, in bekannter Weise zur Verbesserung der Haftung eine Oberflächenbehandlung vorzunehmen. Ein besonders geeignetes Verfahren dafür ist die Beflammung oder die Behandlung mit Plasma, wie beispielsweise Sauerstoffplasma oder Edelgasplasma wie Helium, Argon etc. Hierdurch wird die Haftung der Beschichtung verbessert und eine mögliche weitere Behandlung der Oberfläche wird erleichtert.
Die erfindungsgemäße Barriereschicht zeichnet sich durch gute Adhäsion auf Kunststoffen aus und verhindert wirkungsvoll die Permeation von Kohlenwasserstoffen durch die Behälterwände. Ein weiterer Vorteil besteht in der geringen Toxizität der Lackkomponenten, wodurch das Aufbringen der Barriereschicht keine kostenintensiven sicherheitstechnischen und materialtechnischen Vorkehrungen erforderlich macht.
Die mit der erfindungsgemäßen Barriereschicht versehenen Hohlkörper eignen sich als Vorratsbehälter für organische Stoffe, insbesondere für Kraftstoffe, Mineralöle oder Pflanzenschutzmittel oder Kosmetika. Allgemein ausgedrückt ist die erfindungsgemäß bereitgestellte Barriereschicht zur Beschichtung von Hohlkörpern geeignet, in denen bevorzugt Flüssigkeiten aufbewahrt werden, bei denen einen Diffusion verhindert oder doch zumindest wesentlich herabgesetzt werden soll. Die ausgezeichnete Barrierewirkung kann so ausgenutzt werden zur Beschichtung von z. B. Kraftstofftanks in Kraftfahrzeugen oder auch für Öltanks.
Nachfolgend wird die Erfindung anhand von Auführungsbeispielen und Vergleichsbeispielen näher erläutert. Die Erfindung ist jedoch nicht auf diese speziellen Ausführungsbeispiele beschränkt.

**Ausführungs- und Vergleichsbeispiele**

Referenz beispiel 1 Herstellung eines epoxidhaltigen Metalloxidsols (Sol 1)

In einem 2 Liter Dreihalskolben, der mit Rührer und Innenthermometer versehen ist, werden 1 000 ml Aceton vorgelegt und mit 250 ml 0,1 n HCl versetzt. Zu dieser Lösung werden innerhalb von 30 min 250 ml Glycidyloxypropyltrimethoxysilan zugetropft. Die Rührung wird bei Raumtemperatur 8 Stunden fortgesetzt. Es wird eine klare Lösung erhalten, die vor Einsatz filtriert wird.

Referenz beispiel 2 Herstellung eines chlor- und epoxidhaltigen Metalloxidsols (Sol 2)

Analog Beispiel 1 werden bei Raumtemperatur 1 000 ml Aceton vorgelegt, mit 250 ml 0,1 n HCl versetzt und unter Rührung ein Gemisch aus 160 ml Glycidyloxypropyltrimethoxysilan und 90 ml 3-Chloropropyltrimethoxysilan

zugetropft.

Referenz beispiel 3 Herstellung eines fluor- und epoxidhaltigen Metalloxidsols (Sol 3)

Analog zu Beispiel 1 werden

1 000 ml Aceton
250 ml 0,1 HCl vorgelegt und ein Gemisch aus
12,5 ml Tridecafluorooctyltrimethoxysilan
237,5 ml Glycidyloxypropyltrimethoxysilan

versetzt.

Referenz beispiel 4 Herstellung eines sulfohaltigen Maleinsäurehalbester Styrol-Copolymeren (Polymer 1)

In einem beheizbaren 2 Liter Reaktionsgefäß, das mit Rührer und Innenthermometer versehen ist, werden 900 g Aceton vorgelegt und mit 100 g Maleinsäureanhydrid-Styrol-Copolymer (Molekulargewicht 130 000 D) versetzt. Das Gemisch wird auf 50 Grad erwärmt und gerührt, bis das Polymer gelöst ist. Danach werden 65 g Hydroxypropansulfonsäure zugetropft, und das Gemisch wird 24 Stunden bei 50 Grad gerührt.

Referenz beispiel 5 Herstellung eines fluorhaltigen Maleinsäurehalbester-Styrol-Copolymeren (Polymer 2)

Analog Beispiel 4 wird die Polymerlösung mit 30 g Fluor ethanol umgesetzt.

Vergleichsbeispiel 1

Eine 0,5 Liter Polyethylenflasche (HDPE, Lupolen® 4261) mit einer Wandstärke von 0,5 mm wird beflammt und durch Tauchlackierung mit folgender Beschichtungslösung behandelt:

500 ml Methylethylketon
40 g Bisphenol-A-diglycidether
9,6 g Isophorondiamin

Die Schicht wird 30 min luftgetrocknet und anschließend 45 min bei 85 Grad nachgetrocknet. Es wird eine Schichtdicke von 4,1 µm erhalten. Die beschichtete Flasche wird dann mit 250 ml Superbenzin (bleifrei) gefüllt und mit einen Verschluß aus Aluminium versiegelt.

Der durch Permeation durch die Behälterwand verursachte Benzinverlust bei 25 Grad Lagerungstemperatur wird durch Wägung nach 1 Monat bestimmt. Als Vergleich dient eine unbeschichtete Flasche. Die Wirkung der Barriereschicht (SW in %) ergiebt sich aus folgender Gleichung:

$$SW(\%) = 100 - \frac{C1}{C2} \cdot 100$$

C1 = Gewichtsverlust der beschichteten Flasche
C2 = Gewichtsverlust der unbeschichteten Flasche

Es wird ein Sperrwert von 42% erhalten.
Eine nach bekannten Verfahren fluorierte Flasche ergibt einen Sperrwert von 92%.

Beispiel 1

Analog zu Vergleichsbeispiel 1 wird eine Beschichtung mit folgender Lösungszusammensetzung vorgenommen:

200 ml Aceton
200 ml Methylethylketon
500 ml Metalloxidsol 1
301 g Polymerlösung 1

2,4 g Triethylamin

Es wird ein Sperrwert von 97% erhalten.

Beispiel 2

Analog zu Vergleichsbeispiel 1 wird eine mit Sauerstoffplasma behandelte Flasche mit folgender Lösungszusammensetzung innen und außen beschichtet:

100 ml Aceton
100 ml Methylethylketon
500 ml Metalloxidsol 2
258 g Polymerlösung 1
2,4 g Triethylamin

Es wird ein Sperrwert von 97% erhalten.

Beispiel 3

Analog zu Vergleichsbeispiel 1 wird eine mit Sauerstoffplasma behandelte Flasche mit folgender Lösungszusammensetzung beschichtet:

120 ml Aceton
80 ml Methylethylketon
500 ml Metalloxidsol 3
240 g Polymerlösung 1
2,0 g Triethylamin

Es wird ein Sperrwert von 98% erhalten.

Beispiel 4

Analog zu Vergleichsbeispiel 1 wird eine mit Argonplasma behandelte Flasche mit folgender Lösungszusammensetzung behandelt:

120 ml Aceton
50 ml Methylethylketon
500 ml Metalloxidsol 1
254 g Polymerlösung 2
2,5 g Dimethylbenzuylamin

Es wird ein Sperrwert von mehr als 98% erhalten.

## Patentansprüche

**1.** Barriereschichtzusammensetzung für Kunststoffkörper, die im wesentlichen die nachfolgenden Bestandteile aufweist:

(a) 35 bis 75 Gew.-% eines epoxidhaltigen oder halogen-und epoxidhaltigen Metalloxidsols

(b) 20 bis 60 Gew.-% eines fluor- oder sulfohaltigen Maleinsäurehalbester- oder Maleinsäurehalbamid-Mischpolymerisats der allgemeinen Strukturformel

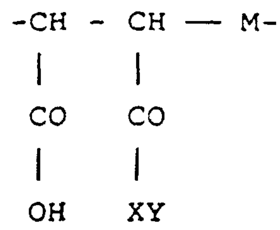

worin M = Vinylmonomer, X = Sauerstoff, Stickstoff

$$Y = -(CH_2)_n-SO_3H$$

$$-(CH_2)_n-F$$

$$-(CF_2)_n-H$$

n = 2 bis 12 bedeuten

(c) 0,5 bis 5 Gew.-% eines Katalysators auf der Basis eines oder mehrerer tertiärer Amine,

wobei die Gewichtsprozente auf die Summe von (a), (b) und (c) bezogen sind.

**2.** Barriereschichtzusammensetzung nach Anspruch 1,
dadurch gekennzeichnet,
daß sie im wesentlichen die in Anspruch 1 aufgelisteten Bestandteile in folgenden Mengen aufweist:

(a) 45 bis 65 Gew.-%
(b) 30 bis 50 Gew.-%
(c) 1 bis 5 Gew.-%,

wobei die Gewichtsprozente auf die Summe von (a), (b) und (c) bezogen sind.

**3.** Barriereschichtzusammensetzung nach Anspruch 1,
dadurch gekennzeichnet,
daß sie im wesentlichen die in Anspruch 1 aufgelisteten Bestandteile in folgenden Mengen aufweist :

(a) 45 bis 55 Gew.-%
(b) 40 bis 50 Gew.-%
(c) 3 bis 5 Gew.-%,

wobei die Gewichtsprozente auf die Summe von (a), (b) und (c) bezogen sind.

**4.** Barriereschichtzusammensetzung nach einem oder mehreren der vorhergehenden Ansprüche,
dadurch gekennzeichnet,
daß die epoxidhaltigen oder halogen- und epoxidhaltigen Metalloxidsole aus Siliciumalkoxidverbindungen, und gegebenenfalls Aluminiumalkoxidverbindungen, Titanalkoxidverbindungen oder Zirkoniumalkoxidverbindungen oder deren Mischungen hergestellt wurden.

**5.** Barriereschichtzusammensetzung nach einem oder mehreren der vorhergehenden Ansprüche,
dadurch gekennzeichnet,
daß das Metalloxidsol durch Hydrolyse und Kondensation von Glycidyloxypropyltrimethoxysilan hergestellt wurde.

**6.** Barriereschichtzusammensetzung nach einem oder mehreren der vorhergehenden Ansprüche,
dadurch gekennzeichnet,

daß das Metalloxidsol durch Hydrolyse und Kondensation eines Gemisches aus Glycidyloxypropyltrimethoxysilan und Chloropropyltrimethoxysilan hergestellt wurde.

**7.** Barriereschichtzusammensetzung nach einem oder mehreren der vorhergehenden Ansprüche,
dadurch gekennzeichnet,
daß das Mischpolymerisat durch Umsetzung von Maleinsäureanhydrid-Mischpolymerisaten mit fluorhaltigen oder sulfohaltigen Alkoholen oder Aminen hergestellt wurde.

**8.** Barriereschichtzusammensetzung nach einem oder mehreren der vorhergehenden Ansprüche,
dadurch gekennzeichnet,
daß das Mischpolymerisat ein sulfosubstituiertes Copolymerisat aus Maleinsäure-Halbester und Styrol ist.

**9.** Barriereschichtzusammensetzung nach einem oder mehreren der vorhergehenden Ansprüche,
dadurch gekennzeichnet,
daß das Mischpolymerisat ein Molekulargewicht von 5 000 bis 350 000 D aufweist.

**10.** Barriereschichtzusammensetzung nach einem oder mehreren der vorhergehenden Ansprüche,
dadurch gekennzeichnet,
daß das Vinylmonomere im Mischpolymerisat Styrol, $\alpha$-Methylstyrol, Methylvinylether, Vinylacetat oder Acrylester ist.

**11.** Barriereschichtzusammensetzung nach einem oder mehreren der vorhergehenden Ansprüche,
dadurch gekennzeichnet,
daß der Katalysator Triethylamin, Tributylamin, 1-Methylimidazol oder 1,4-Diazabicyclo [2,2,2] octan (DABCO$^R$) ist.

**12.** Barriereschichtzusammensetzung nach einem oder mehreren der vorhergehenden Ansprüche,
dadurch gekennzeichnet,
daß zusätzlich 0,1 bis 25 Gew.-%, bezogen auf die Gesamtzusammensetzung, an mit der Barriereschichtzusammensetzung kompatiblen Zusatzstoffen enthalten sind.

**13.** Barriereschichtzusammensetzung nach Anspruch 12,
dadurch gekennzeichnet,
daß 3 bis 20 Gew.-%, bezogen auf die Gesamtzusammensetzung, an mit der Barriereschichtzusammensetzung kompatiblen Zusatzstoffen enthalten sind.

**14.** Barriereschichtzusammensetzung nach Anspruch 13,
dadurch gekennzeichnet,
daß 5 bis 15 Gew.-%, bezogen auf die Gesamtzusammensetzung, an mit der Barriereschichtzusammensetzung kompatiblen Zusatzstoffen enthalten sind.

**15.** Barriereschichtzusammensetzung nach einem der Ansprüche 12-14,
dadurch gekennzeichnet,
daß die Zusatzstoffe Farbstoffe sind.

**16.** Beschichtunglösung zur Herstellung einer Barriereschicht für Kunststoffkörper,
dadurch gekennzeichnet,
daß sie eine Barriereschichtzusammensetzung nach einem oder mehreren der vorhergehenden Ansprüche zusammen mit mindestens einem Lösungsmittel enthält.

**17.** Beschichtungslösung zur Herstellung einer Barriereschicht nach Anspruch 16,
dadurch gekennzeichnet,
daß das Lösungsmittel ein Keton, vorzugsweise Aceton oder Methylethylketon, ist.

**18.** Beschichtungslösung zur Herstellung einer Barriereschicht nach Anspruch 17,
dadurch gekennzeichnet,
daß das Lösungsmittel zusätzlich Propylenglykolmethylether, Ethylglykol, Toluol, Xylol oder Butylacetat enthält.

**19.** Kunststoffkörper,

dadurch gekennzeichnet,
daß er eine Beschichtung mit einer Barriereschichtzusammensetzung nach einem oder mehreren der Ansprüche 1 bis 15 aufweist.

**20.** Kunststoffkörper nach Anspruch 19,
dadurch gekennzeichnet,
daß er ein Kunststoffhohlkörper ist.

**21.** Kunststoffkörper nach Anspruch 20,
dadurch gekennzeichnet,
daß er ein Polyolefinhohlkörper ist, bevorzugt ein Polyethylen- oder Polypropylen-Kunststoffhohlkörper.

**22.** Kunststoffkörper nach einem oder meherern der Ansprüche 19 bis 21
dadurch gekennzeichnet,
daß er eine Barriereschichtzusammensetzung nach einem oder mehreren der Ansprüche 1 bis 15 in einer Dicke von 4 bis 20 μm aufweist.

**23.** Verwendung einer Barriereschichtzusammensetzung nach einem oder mehreren der Ansprüche 1 bis 16 zur Aufbringung mindestens einer Barriereschicht auf Kunststoffkörper.

**24.** Verwendung nach Anspruch 23,
dadurch gekennzeichnet,
daß der Kunststoffkörper ein Kraftstofftank oder Öltank ist.

**25.** Verwendung nach Anspruch 23 oder 24,
dadurch gekennzeichnet,
daß der Kunststoffkörper aus einem Polyolefin oder aus PET oder aus PVC ist.

## Claims

**1.** Barrier layer composition for plastic bodies,
substantially containing the following components:

(a) 35 to 75 % by weight of an epoxide-containing or halogen- and epoxide-containing metal oxide sol;
(b) 20 to 60 % by weight of a fluorine- or sulfo-containing maleic acid hemi ester copolymer or a fluorine- or sulfo-containing maleic acid hemi amide copolymer having the general structural formula

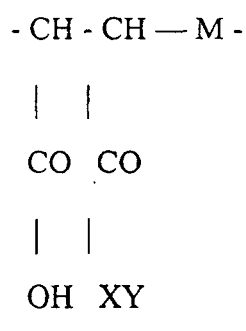

wherein M = vinyl monomer; X = oxygen, nitrogen;

$$Y = -(CH_2)_n-SO_3H,$$

$$-(CH_2)_n-F,$$

$-(CF_2)_n-H;$

n = 2 to 12;
(c) 0.5 to 5 % by weight of a catalyst based on one or more tertiary amines, wherein the weight percentages are based on the sum of (a), (b) and (c).

**2.** Barrier layer composition according to claim 1, characterized in that said barrier layer composition substantially includes the components listed in claim 1 in the following amounts:

(a) 45 to 65 % by weight;
(b) 30 to 50 % by weight
(c) 1 to 5 % by weight,

wherein the weight percentages are based on the sum of (a), (b) and (c).

**3.** Barrier layer composition according to claim 1, characterized in that said barrier layer composition substantially includes the components listed in claim 1 in the following amounts:

(a) 45 to 55 % by weight;
(b) 40 to 50 % by weight;
(c) 3 to 5 % by weight,

wherein the weight percentages are based on the sum of (a), (b) and (c).

**4.** Barrier layer composition according to one or more of the preceding claims, characterized in that said epoxide-containing or halogen- and epoxide-containing metal oxide sols have been prepared from silicon alkoxide compounds, and optionally aluminium alkoxide compounds, titanium alkoxide compounds or zirconium alkoxide compounds or the mixtures thereof.

**5.** Barrier layer composition according to one or more of the preceding claims, characterized in that said metal oxide sol has been prepared by hydrolysis and condensation of glycidyloxypropyl trimethoxy silane.

**6.** Barrier layer composition according to one or more of the preceding claims, characterized in that said metal oxide sol has been prepared by hydrolysis and condensation of a mixture of glycidyloxypropyl trimethoxy silane and chloropropyl trimethoxy silane.

**7.** Barrier layer composition according to one or more of the preceding claims, characterized in that said copolymer has been prepared by reacting maleic anhydride copolymers with fluorine-containing or sulfo-containing alcohols or amines.

**8.** Barrier layer composition according to one or more of the preceding claims, characterized in that said copolymer is a sulfo-substituted copolymer of maleic acid hemi ester and styrene.

**9.** Barrier layer composition according to one or more of the preceding claims, characterized in that said copolymer has a molecular weight of 5000 to 350,000 D.

**10.** Barrier layer composition according to one or more of the preceding claims, characterized in that said vinyl monomer in the copolymer is styrene, $\alpha$-methyl styrene, methyl vinyl ether, vinyl acetate, or acrylic ester.

**11.** Barrier layer composition according to one or more of the preceding claims, characterized in that the catalyst is triethyl amine, tributyl amine, 1-methyl imidazole or 1,4- Diazabicyclo[2,2,2,]octane (DABCO®).

**12.** Barrier layer composition according to one or more of the preceding claims, characterized in that additionally 0.1 to 25 % by weight, based on the total composition, of additives are contained which are compatible with the barrier layer composition.

**13.** Barrier layer composition according to claim 12, characterized in that it contains 3 to 20 % by weight, based on the total composition, of additives which are compatible with the barrier layer composition.

**14.** Barrier layer composition according to claim 13, characterized in that it contains 5 to 15 % by weight, based on the total composition, of additives which are compatible with the barrier layer composition.

**15.** Barrier layer composition according to one of claims 12 - 14, characterized in that said additives are dyes.

**16.** Coating solution for the preparation of a barrier layer for plastic bodies, characterized in that it contains a barrier layer composition according to one or more of the preceding claims together with at least one solvent.

**17.** Coating solution for the preparation of a barrier layer according to claim 16, characterized in that the solvent is a ketone, preferably acetone or methyl ethyl ketone.

**18.** Coating solution for the preparation of a barrier layer according to claim 17, characterized in that the solvent contains additionally propylene glycol methyl ether, ethyl glycol, toluene, xylene, or butyl acetate.

**19.** Plastic body, characterized in that said body has a coating of a barrier layer composition according to one or more of claims 1 - 15.

**20.** Plastic body according to claim 19, characterized in that said body is a plastic hollow body.

**21.** Plastic body according to claim 20, characterized in that said body is a polyolefin hollow body, preferably a polyethylene or polypropylene plastic hollow body.

**22.** Plastic body according to one or more of claims 19 - 21, characterized in that said body has a barrier layer composition according to one or more of claims 1 - 15 in a thickness of 4 to 20 $\mu$m.

**23.** Use of a barrier layer composition according to one or more of claims 1 - 15 for applying at least one barrier layer onto plastic bodies.

**24.** Use according to claim 23, characterized in that said plastic body is a fuel tank or an oil tank.

**25.** Use according to claim 23 or 24, characterized in that said plastic body is made of a polyolefin or of PET or of PVC.

**Revendications**

1. Composition pour revêtement de protection pour des articles en plastique présentant essentiellement les composés suivants :

   a) de 35 à 75 % en poids de sol d'oxyde métallique contenant un époxyde ou contenant un halogène et un époxyde ;
   b) de 20 à 60 % en poids d'un copolymère hémi-ester d'acide maléique contenant du fluore ou du soufre ou un copolymère hémi-amide d'acide maléique contenant du fluore ou du soufre ayant la formule de structure générale

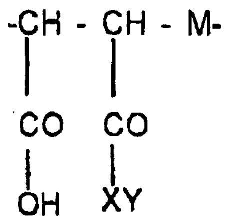

   dans laquelle M = un monomère vinylique ; X = un atome d'oxygène, un atome d'azote ;

   Y = $-(CH_2)_n-SO3H$,

   $-(CH_2)_n-F$,

   $-(CF_2)_n-H$,

   n=2 à 12 ;
   c) de 0,5 à 5 % en poids d'un catalyseur à base d'une ou plusieurs amines tertiaires, dans laquelle les pourcentages en poids sont exprimés par rapport à la somme de (a), (b) et (c),

2. Composition pour revêtement de protection selon la revendication 1, caractérisée en ce que ladite composition pour revêtement de protection inclut essentiellement les composés listés en revendication 1 selon les quantités suivantes :

   (a) de 45 à 65 % en poids ;
   (b) de 30 à 50 % en poids ;
   (c) de 1 à 5 % en poids ;

   dans lesquels les pourcentages en poids sont exprimés par rapport à la somme de (a), (b) et (c).

3. Composition pour revêtement de protection selon la revendication 1, caractérisée en ce que ladite composition inclut essentiellement les composés listés dans la revendication 1 dans les quantités suivantes :

   (a) de 45 à 55 % en poids ;
   (b) de 40 à 50 % en poids ;
   (c) de 3 à 5 % en poids

   dans laquelle les pourcentages en poids sont exprimés par rapport à la somme de (a), (b) et (c).

4. Composition pour revêtement de protection selon l'une ou plusieurs des revendications précédentes, caractérisée en ce que ledit sol d'oxyde métallique contenant un époxyde ou contenant un halogène et un époxyde a été préparé à partir de composés d'alkoxyde de silicium et optionellement de composés d'alkoxyde d'aluminium, de composés d'alkoxyde de titane ou de composés d'alkoxyde de zirconium ou leur mélange.

5. Composition pour revêtement de protection selon l'une ou plusieurs des revendications précédentes, caractérisée en ce que ledit sol d'oxyde métallique a été préparé par hydrolyse et condensation de glycidyloxypropyl trimethoxy silane.

6. Composition pour revêtement de protection selon l'une ou plusieurs des revendications précédentes, caractérisée en ce que ledit sol d'oxyde métallique a été préparé par hydrolyse et condensation d'un mélange de glycidyloxypropyl-trimethoxy silane et de chloropropyl-trimethoxy silane.

7. Composition pour revêtement de protection selon l'une ou plusieurs des revendications précédentes, caractérisée en ce que ledit copolymère a été préparé par réaction de copolymère d'anhydride maléique avec des alcools ou des amines contenant du fluore ou du soufre.

8. Composition pour revêtement de protection selon l'une ou plusieurs des revendications précédentes, caractérisée en ce que ledit copolymère est un copolymère, substitué par du soufre, d'un hémi-ester d'acide maléique et de styrène.

9. Composition pour revêtement de protection selon l'une ou plusieurs des revendications précédentes, caractérisée en ce que ledit copolymère a un poids moléculaire de 5000 à 350.000 D.

10. Composition pour revêtement de protection selon l'une ou plusieurs des revendications précédentes, caractérisée en ce que ledit monomère vinylique dans le copolymère est du styrène, $\alpha$-méthyl styrène, méthyl vinyl éther, vinyl acétate ou ester d'acrylique.

11. Composition pour revêtement de protection selon l'une ou plusieurs des revendications précédentes, caractérisée en ce que le catalyseur est la triéthyl-amine, tributyl-amine, 1-méthyl-imidazole ou 1,4-diazabicyclo[2,2,2,] octane (DABCO®).

12. Composition pour revêtement de protection selon l'une ou plusieurs de revendications précédentes, caractérisée en ce qu'elle comprend en outre 0,1 à 25 % en poids par rapport à la composition totale des additifs qui sont compatibles avec la composition pour revêtement de protection.

13. Composition pour revêtement de protection selon la revendication 12, caractérisée en ce qu'elle comprend 3 à 20 % en poids par rapport à la composition totale d'additifs qui sont compatibles avec la composition pour revêtement de protection,

14. , Composition pour revêtement de protection selon la revendication 13, caractérisée en ce qu'elle contient 5 à 15 % en poids par rapport à la composition totale d'additifs qui sont compatibles avec la composition pour revêtement de protection.

15. Composition pour revêtement de protection selon l'une des revendications 12 à 14, caractérisée en ce que lesdits additifs sont des colorants.

16. Solution de revêtement pour la préparation d'un revêtement de protection pour des articles en plastique, caractérisée en ce qu'elle contient une composition pour revêtement de protection selon l'une ou plusieurs des revendications précédentes avec au moins un solvant.

17. Solution de revêtement pour la préparation d'un revêtement de protection selon la revendication 16, caractérisée en ce que le solvant est une cétone, de préférence acétone ou méthyl éthyl cétone.

18. Solution de revêtement pour la préparation d'un revêtement de protection selon la revendication 17, caractérisée en ce que le solvant contient en outre du propylène-glycol-méthyl-éther, éthyl glycol, toluène, xylène ou butyl acétate.

19. Article en plastique, caractérisé en ce que ledit article a un revêtement d'une composition pour revêtement de protection selon l'une ou plusieurs des revendications 1 à 15.

20. Article en plastique selon la revendication 19, caractérisé en ce que ledit article est un article en plastique.

**21.** Article en plastique selon la revendication 20, caractérisé en ce que ledit article est un article creux de polyoléfine, de préférence un article creux en plastique de polyéthylène ou de polypropylène.

**22.** Article en plastique selon l'une des revendications 19 à 21, caractérisé en ce que ledit article a une composition de revêtement de protection selon une ou plusieurs des revendications 1 à 15 d'une épaisseur de 4 à 20 µm.

**23.** Utilisation d'une composition pour revêtement de protection selon l'une des revendications 1 à 15 pour l'application à au moins une couche de protection sur des articles en plastique.

**24.** Utilisation selon la revendication 23, caractérisée en ce que ledit article en plastique est un réservoir d'essence ou un réservoir d'huile.

**25.** Utilisation selon la revendication 23 ou 24, caractérisée en ce que ledit article en plastique est fait à base de polyoléfine ou de PET ou de PVC.